# EUROPÄISCHE PATENTSCHRIFT

(11) **EP 3 583 341 B1**
(45) Veröffentlichungstag und Bekanntmachung des Hinweises auf die Patenterteilung: **13.11.2024**
(21) Anmeldenummer: 18704907.7
(22) Anmeldetag: 31.01.2018
(51) Int. Cl.: F16L 3/123, F16L 3/12, F16L 55/035

(54) **SCHELLE**
CLAMP
COLLIER DE SERRAGE

(30) Priorität: 15.02.2017 DE 102017103079
(43) Veröffentlichungstag der Anmeldung: 25.12.2019
(73) Patentinhaber: NORMA Germany GmbH, 63477 Maintal (DE)
(72) Erfinder: GEPPERT, Helmut, 63791 Karlstein (DE); SCHMIDT, Frank, 63505 Langenselbold (DE); VON BREITENBACH, Gerrit, 63791 Karlstein (DE); KINTEA, Daniel, 64295 Darmstadt (DE); LENZ, Michael, 61137 Schöneck (DE); LANTSMANN, Natan, 36039 Fulda (DE)
(74) Vertreter: Patentanwälte Olbricht Buchhold Keulertz
(86) Internationale Anmeldenummer: PCT/EP2018/052402
(87) Internationale Veröffentlichungsnummer: WO 2018/149646

(56) Entgegenhaltungen:
- EP-A1- 0 884 518
- DE-A1- 102008 036 386
- GB-A- 2 465 682

## Beschreibung

Die Erfindung betrifft eine Schelle zum Befestigen eines rohr- oder schlauchförmigen Gegenstandes gemäß dem Oberbegriff von Anspruch 1.

Schellen der eingangs genannten Art werden üblicherweise dazu verwendet, Rohre, Schläuche oder Kabel an einem Anbauteil zu fixieren oder zu halten. Das Schellenband wird um das zu befestigende Rohr oder den Schlauch gelegt und die Befestigungsschenkel am Anbauteil befestigt, wodurch ein in Umfangsrichtung geschlossener Aufnahmeraum gebildet wird, in dem das Rohr oder der Schlauch gehalten ist. Beispielsweise werden die Befestigungsschenkel gegeneinander verspannt, so dass das Rohr oder der Schlauch im Aufnahmeraum geklemmt wird. Das Gummiprofil verringert günstigenfalls eine Schwingungsübertragung zwischen dem Rohr oder Schlauch und dem Anbauteil und isoliert diese gegeneinander. Zudem kann das Gummiprofil das Rohr oder den Schlauch vor Kratzern schützen, wenn das Rohr oder der Schlauch in der Schelle verschoben wird.

Bei bekannten Schellen erfolgt eine Fixierung des Gummiprofils üblicherweise durch Lippen, die die Ränder des Schellenbandes umgreifen. Eine solche Schelle ist beispielsweise in der DE 10 2006 020 407 B3 oder in der EP 0 884 518 A1 gezeigt. Das Gummiprofil wird aber, wenn das Rohr oder der Schlauch geklemmt wird, durch die Ränder bzw. die Kanten des Schellenbandes stark beansprucht.

Aufgabe der Erfindung ist es nun, eine Schelle der eingangs genannten Art bereitzustellen, die eine gute Fixierung des Gummiprofils ermöglicht, wobei eine Belastung des Gummiprofils möglichst gering sein soll.

Hauptmerkmale der Erfindung sind im kennzeichnenden Teil von Anspruch 1 angegeben. Ausgestaltungen sind Gegenstand der Ansprüche 2 bis 9.

Zur Lösung der Aufgabe ist eine Schelle zum Befestigen eines rohr- oder schlauchförmigen Gegenstandes vorgesehen, mit einem Schellenband, an dessen Enden jeweils ein nach außen abstehender Befestigungsschenkel vorgesehen ist, und mit einem auf einer radialen Innenfläche des Schellenbandes angeordneten Gummiprofil, das axiale Ränder des Schellenbandes jeweils mit einer Lippe zumindest abschnittsweise umgreift. An der radialen Innenfläche des Schellenbandes ist zumindest eine erste Haltegeometrie und an einer radialen Außenfläche des Gummiprofils ist zumindest eine zweite Haltegeometrie vorgesehen. Die erste und die zweite Haltegeometrie stehen insbesondere in radialer Richtung in Eingriff miteinander.

Üblicherweise wird das Gummiprofil durch die Lippen, die den seitlichen Rand des Schellenbandes umgreifen, am Schellenband fixiert. Im Unterschied dazu erfolgt die Fixierung erfindungsgemäß durch einen Formschluss zwischen Haltegeometrien der radialen Innenfläche des Schellenbandes und der radialen Außenfläche des Gummiprofils. Dies hat mehrere Vorteile: Zum einen ist die Montage des Gummiprofils vereinfacht. Die umgreifenden Lippen des Dichtgummis müssen nicht passgenau auf die Breite und die Dicke des Schellenbandes abgestimmt sein. Durch ein zwischen dem Gummiprofil und dem Schellenband vorhandenes Spiel können die Ränder des Schellenbands relativ einfach zwischen die Lippen des Gummiprofils eingebracht werden. Damit wird eine ausreichend sichere Befestigung des Gummiprofils am Schellenband auch im vormontiertem Zustand erreicht. Ist ein Rohr, ein Schlauch oder eine Leitung in der Schelle montiert, werden die Innenfläche des Schellenbandes und die Außenfläche des Gummiprofils gegeneinander gedrückt, wodurch die erste und die zweite Haltegeometrie ineinander gedrückt werden. Somit wird ein sicherer Formschluss zwischen Schellenband und Gummiprofil gewährleistet.

In Abhängigkeit von der Ausformung der Haltegeometrien kann eine Fixierung des Gummiprofils am Schellenband in Umfangsrichtung und/oder in axialer Richtung bezüglich des durch das Schellenband definierten Aufnahmeraums erzielt werden. Vorzugsweise sind die ersten und die zweiten Haltegeometrien so ausgebildet, dass das Gummiprofil derart gehalten wird, dass die Lippen des Gummiprofils, die die Ränder umgreifen, nicht belastet werden. Die Lippen dienen dabei im Wesentlichen nur noch als Kantenschutz und können dementsprechend mit geringerer Wandstärke ausgebildet sein.

In einem nicht beanspruchten Beispiel weist die erste Haltegeometrie zumindest eine an der Innenfläche des Schellenbandes vorgesehene Vertiefung und die zweite Haltegeometrie zumindest einen an der Außenfläche des Gummiprofils vorgesehenen Vorsprung auf, wobei der Vorsprung in die Vertiefung eingreift. Die Vertiefung und der Vorsprung sind dabei insbesondere radial ausgerichtet. Dabei kann die Vertiefung relativ einfach in das Schellenband eingeformt werden und der Vorsprung bei der Montage des Gummiprofils am Schellenband einfach in die Vertiefung eingeführt werden, so dass weitere Montageschritte nicht erforderlich sind.

Erfindungsgemäß ist an der Innenfläche des Schellenbandes zumindest ein nach innen vorstehender Vorsprung und an der Außenfläche des Gummiprofils zumindest eine Vertiefung ausgebildet, in die der Vorsprung eingreift. Da das Schellenband aus einem steiferen Material hergestellt ist, ist der Vorsprung am Schellenband deutlich stabiler bzw. weniger anfällig für Verformungen. Der Vorsprung im Schellenband kann dabei beispielsweise punktförmig ausgebildet sein oder sich insbesondere in Umfangsrichtung erstrecken. Die Vertiefung kann ohne großem Aufwand im Gummiprofil ausgebildet werden. Wie auch in der vorbeschriebenen Ausgestaltung ergibt sich damit eine einfache Montage bei sicherem Halt.

Der Vorsprung kann durch eine in das Schellenband eingeprägte Sicke gebildet sein. Das Schellenband wird beispielsweise aus einem flachen Blech, beispielsweise aus einem Bandmaterial, hergestellt. Nach dem Zuschneiden des Schellenbandes kann der zumindest eine Vorsprung dann durch Einprägen einer Sicke geformt werden. Dies ermöglicht eine einfache Herstellung des Schellenbandes.

Der Vorsprung und die Vertiefung können verschiedene Formen aufweisen, die jeweils insbesondere zueinander komplementär sind und ineinander greifen. Beispielsweise können sich der Vorsprung und die Vertiefung auf oder parallel zu einer Längsmittelachse des Schellenbandes erstrecken. Die Längsmittelachse des Schellenbandes verläuft beim zur Schelle umgeformten Schellenband axial mittig in Umfangsrichtung. Durch diese Anordnung des Vorsprungs und der Vertiefung wird zumindest eine Fixierung des Gummiprofils am Schellenband in axialer Richtung erreicht.

Vorzugsweise entspricht die Länge und/oder die Breite des Vorsprungs im Wesentlichen der Länge und/oder Breite der Vertiefung, in die der Vorsprung eingreift. Der Vorsprung greift also passgenau in die Vertiefung ein, so dass ein spielfreier Formschluss in Umfangsrichtung und/oder in axialer Richtung erzielt wird. Dadurch wird ein Verschieben des Gummiprofils relativ zum Schellenband in Axialrichtung und/oder in Umfangsrichtung zuverlässig verhindert.

In einer alternativen Ausgestaltung ist die Vertiefung in Umfangsrichtung umlaufend ausgebildet. Dies ermöglicht eine sehr einfache Herstellung des Gummiprofils beispielsweise in einem Strangpressverfahren. Durch das Klemmen eines Rohres innerhalb der Schelle erfolgt eine Komprimierung des Gummiprofils und damit ein weitgehendes Schließen der Vertiefung, so dass der oder die Vorsprünge nicht nur in axialer Richtung, sondern auch in Umfangsrichtung formschlüssig gehalten sind und das Gummiprofil gegenüber dem Schellenband auch gegenüber Rotation sichern.

Beispielsweise sind mehrere in Umfangsrichtung und/oder in axialer Richtung versetzt angeordnete Vertiefungen vorgesehen. Dadurch kann über den gesamten Umfang ein gleichmäßiger Halt erreicht und gegebenenfalls auftretende Belastungen großflächiger verteilt werden. Die Vertiefungen können so ausgebildet sein, dass jeweils ein oder mehrere Vorsprünge in diese eingreifen können, so dass eine bessere Fixierung des Gummiprofils am Schellenband erfolgen kann. Es können auch mehr Vertiefungen als Vorsprünge vorgesehen sein, wobei die Vertiefungen gegebenenfalls auch eine gewisse thermische Isolation bewirken können. Die Vorsprünge können individuell für die gewünschte Fixierung in das Schellenband eingeformt werden.

Vorteilhafterweise sind mehrere, insbesondere drei, in Umfangsrichtung umlaufende Vertiefungen in der Außenfläche des Gummiprofils vorgesehen. Dabei wirkt insbesondere nur eine mittig verlaufende Vertiefung mit einem oder mehreren Vorsprüngen zusammen, während die anderen Vertiefungen frei bleiben. Diese Vertiefungen ermöglichen eine gewisse axiale elastische Verformung, womit eine gewisse axiale Relativbewegung eines in der Schelle gehaltenen Rohres ausgeglichen werden kann, ohne dass eine Beschädigung des Gummiprofils zu befürchten ist. Die Relativbewegung kann beispielsweise durch temperaturbedingte Längenänderungen des Rohres hervorgerufen werden. Eventuell auftretende axiale Zwangsspannungen können so reduziert werden. Gleichzeitig bleibt die Steifigkeit des Gummiprofils in radialer Richtung nahezu unverändert, so dass die Vertiefungen keinen nennenswerten Einfluss auf ein Schwingungsverhalten haben.

Bevorzugterweise beträgt eine Tiefe der Vertiefung zwischen 10 und 25 %, insbesondere zwischen 15 und 20 % einer radialen Dicke des Gummiprofils. Die radiale Dicke des Gummiprofils wird dabei von der dem Schellenband zugewandten Außenfläche bis zu einer zum Aufnahmeraum gerichteten Innenfläche des Gummiprofils gemessen. Beim Spannen der Schelle erfolgt üblicherweise eine Dickenreduktion, so dass sich die Vertiefungen bei gespannter Schelle zumindest teilweise schließen.

Vorzugsweise sind mehrere in Umfangsrichtung und/oder in axialer Richtung versetzte Vorsprünge vorgesehen. Diese können in unterschiedliche oder in eine gemeinsame Vertiefung eingreifen. Dadurch kann eine bessere Fixierung erreicht werden, da die Haltekräfte auf mehrere Vorsprünge verteilt werden. Sind die Vorsprünge und die Vertiefungen in Umfangsrichtung verteilt, können gleichmäßig über den Umfangsbereich verteilt Haltekräfte aufgenommen werden.

Das Gummiprofil weist zusätzlich im Bereich der Lippen in Umfangsrichtung verlaufende Ausnehmungen auf. Dadurch wird ein direkter Kontakt zwischen den Rändern des Schellenbands und dem Gummiprofil verhindert. Dies erlaubt einen schnellen und einfachen Zusammenbau der Schelle durch Einschieben des Schellenbandes zwischen die Lippen des Gummiprofils, da die häufig relativ scharfen Kanten des Schellenbandes dabei nicht in Kontakt mit dem Gummiprofil gelangen. Eine Beschädigung des Gummiprofils beim Einschieben des Schellenbandes wird so zuverlässig verhindert. Beim späteren Spannen der Schelle können sich die Ränder des Schellenbandes darüber hinaus nicht in das Gummiprofil eindrücken, so dass das Gummiprofil im Bereich der Ränder des Schellenbandes vor Beschädigungen durch das Schellenband geschützt ist. Ferner ergibt sich eine gleichmäßigere Verteilung einer Belastung und eines Anpressdrucks.

Vorzugsweise beträgt eine Tiefe der Ausnehmung zwischen 10 und 25 %, insbesondere zwischen 15 und 20% einer radialen Dicke des Gummiprofils. Erfindungsgemäß weisen die Ausnehmungen und die Vertiefungen dabei einen gleichen Querschnitt auf. Die Ausnehmung werden dann beim Spannen der Schelle durch die Komprimierung des Gummiprofils weitgehend verschlossen und erlauben so eine gleichmäßige Lastverteilung.

Dabei ist besonders bevorzugt, dass zwischen den Rändern des Schellenbandes und dem Gummiprofil ein Luftspalt ausgebildet ist. Die Lippen des Gummiprofils umgreifen die Ränder des Schellenbandes dadurch mit relativ großem Spiel. Eine Beschädigung des Gummiprofils durch das Schellenband ist damit nahezu ausgeschlossen.

Dabei können aufeinander zu gerichtete Enden der Lippen mit sich konisch verjüngendem Querschnitt ausgebildet sein. Die Lippen müssen nahezu keine Kräfte aufnehmen, sondern dienen im Wesentlichen nur als Kantenschutz. Dementsprechend können sie relativ dünnwandig ausgebildet sein, was zu Materialeinsparungen führt.

In einer bevorzugten Weiterbildung sind zumindest Außenkanten des Gummiprofils abgerundet. Insbesondere bei kleinen Schellendurchmessern reduziert sich dadurch eine Spannung im Bereich der Außenkanten. Damit ergibt sich eine höhere Lebensdauer.

Das Gummiprofil kann im Strangpressverfahren hergestellt sein, also als Endlosmaterial, und auf die jeweils benötigte Länge zugeschnitten werden. Eine in Umfangsrichtung des Schellenbandes bzw. in Längsrichtung des Gummiprofils durchgehende Vertiefung oder ein durchgehender Vorsprung kann bereits beim Strangpressen ausgeformt werden, so dass für die Herstellung der Vertiefung oder des Vorsprungs keine zusätzlichen Arbeitsschritte erforderlich sind. Beispielsweise kann das Gummiprofil in einem Mehrkomponenten-Strangpressverfahren hergestellt werden, so dass verschiedene Bereiche des Gummiprofils aus verschiedenen Materialien hergestellt werden. Dadurch ist eine belastungsgerechte Materialanpassung des Gummiprofils oder eine Anpassung an eine gewünschte Funktion möglich. Beispielsweise kann die Haltegeometrie aus einem steifen Material hergestellt werden und die Kontaktfläche aus einem weichen Material, das eine Anpassung an den zu haltenden Gegenstand ermöglicht bzw. eine höhere Reibung zwischen der Schelle und dem Gegenstand bereitstellt, so dass dieser sicher gehalten ist. Das Material kann beispielsweise handelsüblicher Kunststoff oder ein Gummimaterial, Ethylen-Propylen-Dien-Kautschuk (*EPDM),* Acrylnitril-Butadien-Kautschuk bzw. Nitrilkautschuk (NBR), Silikon, FKM (Fluor-Karbon-Kautschuk), ein thermoplastisches Elastomer, PVC (Polyvinylchlorid), SBR (Styrol-Butadien-Kautschuk) oder eine Kombination aus diesen Materialien sein. Je nach verwendeten Material kann das Gummiprofil eine elektrische Isolation bewirken. Dies trifft beispielsweise für EPDM mit bestimmten Füllmaterialen zu, was bevorzugt zur Befestigung von Aluminiumrohren eingesetzt werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine perspektivische Ansicht einer erfindungsgemäßen Schelle;
- Fig. 2: eine perspektivische Ansicht des Schellenbandes der Schelle aus Fig. 1;
- Fig. 3: eine Draufsicht auf die Schelle aus Fig. 1;
- Fig. 4: eine Teilschnittansicht durch die Schelle aus Fig. 1; und
- Fig. 5: eine Schnittansicht durch das Schellenband und das Gummiprofil der Schelle aus Figur 1.

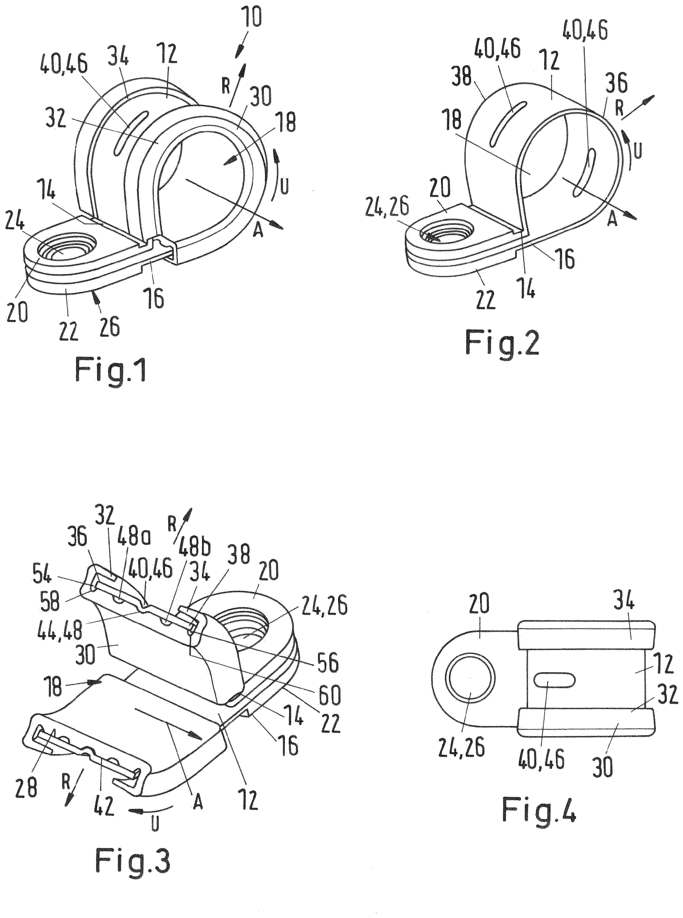

In Figur 1 ist eine Schelle 10 zur Befestigung eines rohrförmigen oder schlauchförmigen Gegenstandes gezeigt. Die Schelle 10 hat ein Schellenband 12, an dessen Enden 14, 16 jeweils ein bezüglich eines durch die Schelle 10 gebildeten Aufnahmeraums 18 radial nach außen abstehender Befestigungsschenkel 20, 22 vorgesehen ist. Die Befestigungsschenkel 20, 22 weisen jeweils eine Ausnehmung 24, 26 für ein Befestigungsmittel, beispielsweise eine Schraube, auf.

In der hier gezeigten Ausführungsform sind die Befestigungsschenkel 20, 22 parallel zueinander angeordnet, so dass zum Befestigen des Gegenstandes nur ein Befestigungsmittel erforderlich ist, das sich durch beide Befestigungsschenkel 20, 22 erstreckt und diese gegeneinander spannt und gleichzeitig die Schelle 10 an einem Anbauteil hält. Alternativ können die Befestigungsschenkel 20, 22 auch beabstandet voneinander angeordnet sein, so dass diese jeweils separat voneinander an einem Anbauteil fixiert werden können. In diesem Fall wird der Aufnahmeraum 18 nicht vollständig vom Schellenband 12 umschlossen.

Das Schellenband 12 kann aus Metall, beispielsweise aus einem Blechband, oder einem anderen zugfesten Material hergestellt sein.

Auf der bezüglich des Aufnahmeraums 18 radialen Innenfläche 28 des Schellenbandes 12 ist ein Gummiprofil 30 vorgesehen. Das Gummiprofil 30 soll das Schellenband 12 gegenüber dem rohrförmigen oder schlauchförmigen Gegenstand isolieren und eine Übertragung von Schwingungen verhindern oder reduzieren. Des Weiteren schützt das Gummiprofil 30 den Gegenstand vor einem Verkratzen durch das Schellenband 12, beispielsweise, wenn der Gegenstand nach dem Einlegen in die Schelle 10 positioniert, also relativ zur Schelle 10 ausgerichtet wird.

Das Gummiprofil 30 hat an den Rändern jeweils eine Lippe 32, 34, die Ränder 36, 38 des Schellenbandes 12 (siehe Figur 2 und 3) umgreifen, wobei die Lippen 32, 34, wie nachfolgend erläutert wird, lediglich eine grobe Vorpositionierung des Gummiprofils 30 am Schellenband 12 herstellen. Da die Lippen 32, 34 aber sowohl in axialer Richtung A wie auch in radialer Richtung R bezüglich des Aufnahmeraums 18 beabstandet von den Rändern 36, 38 des Schellenbandes 12 sind, werden die Lippen 32, 34 durch die Ränder 36, 38 mechanisch nicht belastet.

Die genaue Positionierung des Gummiprofils 30 am Schellenband 12 erfolgt in diesem Ausführungsbeispiel durch zwei auf der Innenfläche 28 des Schellenbandes 12 vorgesehene erste Haltegeometrien 40 sowie auf der radialen Außenfläche 42 des Gummiprofils 30 vorgesehene komplementäre zweite Haltegeometrien 44, die in radialer Richtung R ineinander greifen. Die ersten Haltegeometrien 40 weisen jeweils einen radial nach innen vorstehenden Vorsprung 46 auf, die zweiten Haltegeometrien 44 jeweils eine Vertiefung 48.

Die Vorsprünge 46 sind jeweils durch in Umfangsrichtung U verlaufende Sicken gebildet, die durch Prägen in das Schellenband 12 eingebracht sind. Die Vorsprünge 46 erstrecken sich jeweils abschnittsweise in Umfangsrichtung U.

Die Vertiefungen 48 verlaufen ebenfalls jeweils in Richtung einer Längsmittelachse des Schellenbandes 12, also in Umfangsrichtung U, und sind so ausgebildet, dass die Vorsprünge 46 in diese hineinragen können. Im Gummiprofil 30 sind weitere Vertiefungen 48a, 48b vorgesehen, die sich in Längsrichtung bzw. in Umfangsrichtung U erstrecken, wobei in diese Vertiefungen 48a, 48b keine Vorsprünge 46 ragen. In Ecken 50, 52 des Gummiprofils 30 sind des Weiteren in Umfangsrichtung U verlaufende Ausnehmungen 54, 56 vorgesehen.

Das Gummiprofil 30 ist beispielsweise in einem Strangpressverfahren hergestellt und auf die benötigte Länge geschnitten.

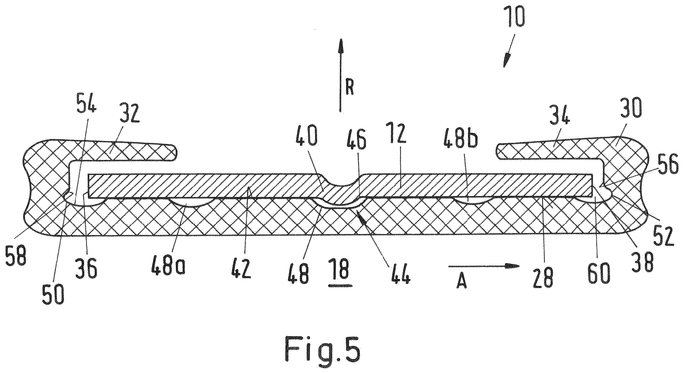

Wie insbesondere in den Figuren 3 und 5 zu sehen ist, ist der Abstand der Lippen 32, 34 bzw. der Ecken 50, 52 größer als der Abstand der Ränder 36, 38, also die Breite des Schellenbandes 12. Dadurch liegt das Gummiprofil 30 in axialer Richtung A nicht an den Rändern 36, 38 des Schellenbandes 12 an. Durch die Ausnehmungen 54, 56 ist das Gummiprofil 30 zudem in radialer Richtung R beabstandet von den Rändern 36, 38 des Schellenbandes 12. Das heißt, die Ränder 36, 38 des Schellenbandes 12 haben keinen Kontakt mit dem Gummiprofil 30 und es tritt somit keine Kantenbelastung auf. Insbesondere ist der Abstand zwischen den Rand 36 und der Lippe 32 bzw. der Abstand zwischen dem Rand 38 und der Lippe 34 gleich groß, so dass das Schellenband im Wesentlichen mittig bzw. symmetrisch zwischen den Lippen angeordnet ist. Die Position des Gummiprofils 30 relativ zum Schellenband 12 hängt von der Position der ersten und der zweiten Haltegeometrie 40, 44 ab.

Zur Befestigung eines rohr- oder schlauchförmigen Gegenstandes wird dieser durch den Aufnahmeraum 18 eingeführt und die Schelle 10 mit einem Befestigungsmittel an einem Anbauteil befestigt, wobei die Befestigungsschenkel 20, 22 durch das Befestigungsmittel gegeneinander gespannt werden. Dadurch gelangt die Schelle 10 in Umfangsrichtung U umlaufend mit dem Gegenstand in Anlage, so dass der Gegenstand in der Schelle 10 klemmend gehalten.

Dadurch wird die Außenfläche 42 des Gummiprofils 30 gegen die Innenfläche 28 des Schellenbandes 12 gedrückt, wodurch die ersten Haltegeometrien 40 und die zweite Haltegeometrien 44, also die Vorsprünge 46 und die Vertiefungen 48 in radialer Richtung ineinander eingreifen und einen Formschluss in axialer Richtung bilden. Durch den ansteigenden Druck beim Spannen des Schellenbandes 12 werden die Vorsprünge 46 in die Vertiefungen 48 gepresst, so dass sich der Formschluss nicht lösen kann.

Wie in den Figuren 3 und 5 zu sehen ist, liegt die Außenfläche 42 des Gummiprofils 30 mit Ausnahme der Vertiefungen 48a, 48b und der Ausnehmungen 54, 56 flächig an der Innenfläche 28 des Schellenbandes an. Durch den Abstand zwischen den Rändern 36, 38 und den Ausnehmungen 54, 56 ist zwischen den Rändern 36, 38 und dem Gummiprofil in axialer Richtung ein Luftspalt 58, 60 gebildet, so dass die Ränder 36, 38 nicht in das Gummiprofil 30 einschneiden können und das Gummiprofil 30 zuverlässig vor Beschädigungen durch die Ränder 36, 38 des Schellenbandes geschützt ist. Die Vertiefungen 48a, 48b bewirken zudem eine gleichmäßigere Verteilung von Spannungen, insbesondere der auftretenden Druckspannungen, innerhalb des Gummiprofils 30.

Da das Gummiprofil 30 im vormontierten Zustand ein relativ großes Spiel zum Schellenband 12 haben kann, ist die Geometrie der Vorsprünge und Vertiefungen so ausgeführt, dass beim Anziehen der Schelle eine Zentrierung des Gummiprofils 30 auf dem Schellenband 12 erfolgt. Wie bereits erläutert, erfolgt also die Positionierung und Befestigung des Gummiprofils 30 am Schellenband 12 durch die in radialer Richtung R ineinandergreifenden ersten und zweiten Haltegeometrien 40, 44. In der hier gezeigten Ausführungsform erfolgt eine Fixierung in axialer Richtung, wobei die Breite der Vertiefungen 44, 48 im Wesentlichen der Breite der Vorsprünge 40, 46 entspricht, so dass in axialer Richtung eine spielfreie Fixierung erfolgt. Durch eine entsprechende Positionierung und Ausformung der ersten und zweiten Haltegeometrien 40, 44 ist zusätzlich eine Fixierung in Umfangsrichtung U möglich, beispielsweise, indem auch in Umfangsrichtung U ein Formschluss zwischen den ersten und den zweiten Haltegeometrien 40, 44 hergestellt wird.

Die Erfindung ist nicht auf eine der vorbeschriebenen Ausführungsformen beschränkt, sondern in vielfältiger Weise abwandelbar.

Insbesondere können die jeweils ineinandergreifenden ersten und zweiten Haltegeometrien 40, 44 in Umfangsrichtung und/oder in axialer Richtung verteilt angeordnet sein, um die Fixierung des Gummiprofils 30 am Schellenband 12 zu verbessern. Des Weiteren können die erste und die zweite Haltegeometrie 40, 44 sowohl Vorsprünge 46 wie auch Vertiefungen 48 aufweisen. Die erste und die zweite Haltegeometrie 40, 44 müssen lediglich so ausgebildet sein, dass diese in radialer Richtung R ineinander greifen und einen Formschluss in axialer Richtung A und/oder in Umfangsrichtung U zwischen dem Gummiprofil 30 und dem Schellenband 12 herstellen können.

Das Gummiprofil 30 kann beispielsweise mit einem Strangpressverfahren hergestellt werden. Insbesondere kann das Gummiprofil 30 auch aus verschieden Materialien bestehen, wodurch eine belastungsgerechte und/oder funktionsgerechte Anpassung der Eigenschaften des Gummiprofils 30 erfolgen kann. Beispielsweise kann das Gummiprofil 30 aus handelsüblichen Kunststoffen oder Gummimaterialien, Ethylen-Propylen-Dien-Kautschuk (*EPDM),* Acrylnitril-Butadien-Kautschuk bzw. Nitrilkautschuk (NBR), Silikon oder Kombinationen aus diesen bestehen.

### Bezugszeichenliste

- 10: Schelle
- 12: Schellenband
- 14: erstes Ende des Schellenbandes
- 16: zweites Ende des Schellenbandes
- 18: Aufnahmeraum
- 20: Befestigungsschenkel
- 22: Befestigungsschenkel
- 24: Ausnehmung
- 26: Ausnehmung
- 28: radiale Innenfläche des Schellenbandes
- 30: Gummiprofil
- 32: Lippe des Gummiprofils
- 34: Lippe des Gummiprofils
- 36: Rand des Schellenbandes
- 38: Rand des Schellenbandes
- 40: erste Haltegeometrie
- 42: radiale Außenfläche des Gummiprofils
- 44: zweite Haltegeometrie
- 46: Vorsprung
- 48: Vertiefung
- 48a: Vertiefung
- 48b: Vertiefung
- 50: Ecke
- 52: Ecke
- 54: Ausnehmung
- 56: Ausnehmung
- 58: Luftspalt
- 60: Luftspalt

- A: axiale Richtung
- R: radiale Richtung
- U: Umfangsrichtung

## Patentansprüche

1. Schelle (10) zum Befestigen eines rohr- oder schlauchförmigen Gegenstandes, mit einem Schellenband (12), an dessen Enden (14, 16) jeweils ein nach außen abstehender Befestigungsschenkel (20, 22) vorgesehen ist, und mit einem auf einer radialen Innenfläche (28) des Schellenbandes (12) angeordneten Gummiprofil (30), das Ränder (36, 38) des Schellenbandes (12) jeweils mit einer Lippe (32, 34) zumindest abschnittsweise umgreift, wobei an der radialen Innenfläche (28) des Schellenbandes (12) zumindest eine erste Haltegeometrie (40) und an einer radialen Außenfläche (42) des Gummiprofils (30) zumindest eine zweite Haltegeometrie (44) vorgesehen sind, wobei die erste und die zweite Haltegeometrie (40, 44) in radialer Richtung (R) in Eingriff miteinander stehen, wobei an der Innenfläche (28) des Schellenbandes (12) zumindest ein radial nach innen vorstehender Vorsprung (46) und an der radialen Außenfläche (42) des Gummiprofils (30) zumindest eine Vertiefung (48) ausgebildet ist, in der der Vorsprung (46) eingreift, wobei das Gummiprofil (30) Ecken (50, 52) aufweist, wobei in den Ecken (50, 52) des Gummiprofils (30) in Umfangsrichtung (U) verlaufende Ausnehmungen (54, 56) vorgesehen sind, **dadurch gekennzeichnet, dass** die Ausnehmungen (54, 56) und die mindestens eine Vertiefung (48) einen gleichen Querschnitt aufweisen.

2. Schelle nach Anspruch 1, **dadurch gekennzeichnet, dass** der Vorsprung (46) durch eine in das Schellenband (12) eingeprägte Sicke gebildet ist.

3. Schelle nach einem der Ansprüche 1 oder 2, **dadurch gekennzeichnet, dass** sich der Vorsprung (46) und/oder die Vertiefung (48) auf oder parallel zu einer Längsmittelachse des Schellenbandes (12) erstrecken.

4. Schelle nach einem der Ansprüche 1 bis 3, **dadurch gekennzeichnet, dass** die Vertiefung (48) in Umfangsrichtung umlaufend ausgebildet ist.

5. Schelle nach einem der Ansprüche 1 bis 4, **dadurch gekennzeichnet, dass** mehrere in Umfangsrichtung (U) und/oder in axialer Richtung (A) versetzt angeordnete Vertiefungen (48) vorgesehen sind

6. Schelle nach einem der Ansprüche 1 bis 4, **dadurch gekennzeichnet, dass** mehrere, in Umfangsrichtung (U) und/oder in axialer Richtung (A) versetzte Vorsprünge (46) vorgesehen sind.

7. Schelle nach einem der vorhergehenden Ansprüche, **dadurch gekennzeichnet, dass** das Gummiprofil (30) im Bereich der Lippen (32, 34) in Umfangsrichtung (U) verlaufende durchgehende Ausnehmungen (54, 56) aufweist.

8. Schelle nach einem der vorhergehenden Ansprüche, **dadurch gekennzeichnet, dass** in axialer Richtung zwischen den Rändern (36, 38) des Schellenbandes (12) und dem Gummiprofil (30) ein Luftspalt (58, 60) ausgebildet ist.

9. Schelle nach einem der vorhergehenden Ansprüche, **dadurch gekennzeichnet, dass** das Gummiprofil (30) im Strangpressverfahren hergestellt ist, insbesondere in einem Mehrkomponenten-Strangpressverfahren.

## Claims

1. Clamp (10) for fastening a tubular or hose-like object, having a clamp band (12), on the ends (14, 16) of which provision is made of in each case one outwardly protruding fastening limb (20, 22), and having a rubber profile (30), which is arranged on a radial inner surface (28) of the clamp band (12) and which at least sectionally engages, in each case by way of a lip (32, 34), around edges (36, 38) of the clamp band (12), wherein, on the radial inner surface (28) of the clamp band (12), provision is made of at least one first holding geometry (40) and, on a radially outer surface (42) of the rubber profile (30), provision is made of at least one second holding geometry (44), wherein the first and second holding geometries (40, 44) are in engagement with one another in a radial direction (R), wherein, on the inner surface (28) of the clamp band (12), there is formed at least one radially inwardly projecting projection (46) and, on the radial outer surface (42) of the rubber profile (30), there is formed at least one depression (48) in which the projection (46) engages, wherein the rubber profile (30) has corners (50, 52), wherein, in the corners (50, 52) of the rubber profile (30), provision is made of recesses (54, 56) which run in a peripheral direction (U), **characterized in that** the recesses (54, 56) and the least one depression (48) have an identical cross section.

2. Clamp according to Claim 1, **characterized in that** the projection (46) is formed by a bead which is impressed into the clamp band (12).

3. Clamp according to either of Claims 1 and 2, **characterized in that** the projection (46) and/or the depression (48) extend(s) on or parallel to a longitudinal central axis of the clamp band (12).

4. Clamp according to one of Claims 1 to 3, **characterized in that** the depression (48) is formed so as to run around in the peripheral direction.

5. Clamp according to one of Claims 1 to 4, **characterized in that** provision is made of multiple depressions (48) which are arranged offset in the peripheral direction (U) and/or in the axial direction (A).

6. Clamp according to one of Claims 1 to 4, **characterized in that** provision is made of multiple projections (46) which are offset in the peripheral direction (U) and/or in the axial direction (A).

7. Clamp according to one of the preceding claims, **characterized in that,** in the region of the lips (32, 34), the rubber profile (30) has continuous recesses (54, 56) which run in the peripheral direction (U).

8. Clamp according to one of the preceding claims, **characterized in that** an air gap (58, 60) is formed between the edges (36, 38) of the clamp band (12) and the rubber profile (30) in the axial direction.

9. Clamp according to one of the preceding claims, **characterized in that** the rubber profile (30) is produced in an extrusion process, in particular in a multi-component extrusion process.

## Revendications

1. Collier de serrage (10) destiné à fixer un objet en forme de tube ou de tuyau, ledit collier comprenant une bande de collier (12), aux extrémités (14, 16) de laquelle est prévue une branche de fixation (20, 22) qui fait saillie vers l'extérieur, et un profilé de caoutchouc (30) qui est disposé sur une surface intérieure (28) de la bande de collier (12) et qui s'engage autour de bords (36, 38) de la bande de collier (12) au moins par portions, à chaque fois avec une lèvre (32, 34), au moins une première géométrie de retenue (40) étant prévue sur la surface intérieure radiale (28) de la bande de collier (12) et au moins une deuxième géométrie de retenue (44) étant prévue sur une surface extérieure radiale (42) du profilé en caoutchouc (30), les première et deuxième géométries de retenue (40, 44) étant en engageant l'une avec l'autre dans une direction radiale (R), au moins une saillie (46) qui fait saillie radialement vers l'intérieur étant formée sur la surface intérieure (28) de la bande de collier (12) et au moins une dépression (48) étant formée sur la surface extérieure radiale (42) du profilé en caoutchouc (30), dépression dans laquelle s'engage la saillie (46), le profilé en caoutchouc (30) comportant des coins (50, 52), des évidements (54, 56) qui s'étendent dans la direction circonférentielle (U) étant prévus dans les coins (50, 52) du profilé en caoutchouc (30), **caractérisé en ce que** les évidements (54, 56) et l'au moins une dépression (48) ont une même section transversale.

2. Collier de serrage selon la revendication 1, **caractérisé en ce que** la saillie (46) est formée par une moulure formée dans la bande de collier (12) par estampage.

3. Collier de serrage selon l'une des revendications 1 ou 2, **caractérisé en ce que** la saillie (46) et/ou la dépression (48) s'étendent sur un axe central longitudinal de la bande de collier (12) ou parallèlement à celui-ci.

4. Collier selon l'une des revendications 1 à 3, **caractérisé en ce que** l'évidement (48) est conçu pour s'étendre dans la direction circonférentielle.

5. Collier de serrage selon l'une des revendications 1 à 4, **caractérisé en ce que** plusieurs évidements (48) qui sont disposés de manière décalée dans la direction circonférentielle (U) et/ou dans la direction axiale (A) sont prévus.

6. Collier de serrage selon l'une des revendications 1 à 4, **caractérisé en ce qu'**une pluralité de saillies (46) sont prévues qui sont décalées dans la direction circonférentielle (U) et/ou dans une direction axiale (A) .

7. Collier de serrage selon l'une des revendications précédentes, **caractérisée en ce que** le profilé en caoutchouc (30) comporte des évidements traversants (54, 56) qui s'étendent dans la direction circonférentielle (U) dans la région des lèvres (32, 34) .

8. Collier de serrage selon l'une des revendications précédentes, **caractérisé en ce qu'**un espace d'air (58, 60) est ménagé dans la direction axiale entre les bords (36, 38) de la bande de collier (12) et le profilé en caoutchouc (30).

9. Collier de serrage selon l'une des revendications précédentes, **caractérisé en ce que** le profilé en caoutchouc (30) est réalisé dans un procédé d'extrusion, notamment dans un procédé d'extrusion multi-composants.
